# EUROPÄISCHE PATENTANMELDUNG

(11) **EP 0 640 823 A2**
(43) Veröffentlichungstag der Anmeldung: **01.03.1995**
(21) Anmeldenummer: 94111223.7
(22) Anmeldetag: 19.07.1994
(51) Int. Cl.: G01M 3/28, G01M 3/00

(54) **Vorrichtung und Verfahren zur Prüfung von Hohlräumen**

(30) Priorität: 25.08.1993 DE 4328574
(71) Anmelder: Daimler-Benz Aerospace Aktiengesellschaft, D-81663 München (DE)
(72) Erfinder: Ertl, Herbert, D-82335 Berg (DE); Hütter, Horst, D-83684 Tegernsee (DE); Puttinger, Dietmar, D-80539 München (DE)

(57) **Zusammenfassung**

Die Vorrichtung zur Prüfung von Hohlräumen, wie Kanälen, Rohrleitungen und dgl. auf Dichtigkeit, besteht aus zwei unabhängig voneinander im zu überprüfenden Hohlraum positionierbaren Prüfköpfen, die mit einer Vorschubeinrichtung und mit einer Druckfluidquelle verbunden sind. Jeder Prüfkopf besteht aus zwei Prüfkörpern (1a,1b,bzw 2a,2b), die mittels einer längenverbänderlichen Verbindungsanordnung miteinander verbunden sind und jeder Prüfkörper ist mit einer eigenen Dichtungsanordnung versehen, die mit der Druckfluidquelle verbunden ist.

## Beschreibung

Die vorliegende Erfindung betrifft eine Vorrichtung zur Prüfung von Hohlräumen, wie Kanälen, Rohrleitungen und dgl., auf Dichtigkeit, bestehend aus zwei unabhängig voneinander im zu überprüfenden Hohlraum positionierbaren Prüfköpfen, die mit einer Vorschubeinrichtung verbunden sind, sowie mit einer Druckfluidquelle, so daß sie nach Druckbeaufschlagung der an ihnen angeordneten Dichtungsanordnungen den Hohlraum lokal abdichten und Prüfstrecken zwischen sich bilden.

Aus der DE-OS 41 10 375 ist ein Verfahren zum Prüfen von Rohrleitungen auf Dichtigkeit mittels eines fernsteuerbaren Gerätes bekannt, das in der zu prüfenden Rohrleitung verfahrbar ist und mittels dem die Rohrleitung abgedichtet werden kann. Zu diesem Zweck sind zwei Geräte vorgesehen, die unabhängig voneinander in der zu prüfenden Rohrleitung verfahrbar sind, wobei jedes Gerät mit einer Dichtung versehen ist, die nach entsprechender Druckbeaufschlagung an der Rohrinnenwand anliegt, so daß zwischen den beiden Geräten ein Prüfdruck aufgebaut werden kann, um die Rohrleitung auf Undichtigkeiten zu überprüfen.

Nach Beendigung der Druckprüfung des einen Abschnitts wird der Prüfdruck abgebaut und das eine Gerät dem anderen Gerät angenähert, so daß die beiden Geräte miteinander gekoppelt werden können. Nach dem Ankoppelvorgang werden beide Geräte zusammen verfahren, voneinander getrennt und ein zweiter Prüfabschnitt durch Verfahren des einen Gerätes hergestellt.

Bei der Überprüfung einer Rohrleitungsstrecke, z. B. eines unterirdischen Abwasserkanals auf Leckstellen wird üblicherweise zuerst eine möglichst lange Strecke abgedrückt, wonach bei erkannten Leckagen nach einer bestimmten Prüfstrategie, z. B. fortlaufende Halbierung der Prüfungsstrecke, die genaue Lage der Leckstelle ermittelt wird. Bereits bei wenigen Leckstellen sind zahlreiche Prüfschritte erforderlich, um eine für spätere Sanierungsmaßnahmen ausreichende Zustandserfassung des Hohlraums zu erreichen. Es wurde festgestellt, daß ca. 80% der Prüfzeiten durch die vorgeschriebenen Haltezeiten für den Prüfdruck erforderlich sind.

Aufgabe der vorliegenden Erfindung ist es, die erforderliche Prüfzeit bei der Überprüfung langer unterirdischer, sonst nicht zugänglicher Hohlräume drastisch zu reduzieren.

Ausgehend von einer Vorrichtung der eingangs näher genannten Art wird zur Lösung dieser Aufgabe vorgeschlagen, daß jeder Prüfkopf aus zwei Prüfkörpern besteht, die mittels einer längenveränderlichen Verbindungsanordnung miteinander verbunden sind, und daß jeder Prüfkörper mit einer eigenen Dichtungsanordnung versehen ist, die mit der Druckfluidquelle verbunden ist.

Bei einem bevorzugten Ausführungsbeispiel besteht die Verbindungsanordnung aus einem Hydraulikzylinder, der mit dem einen Prüfkörper verbunden ist und aus einem in diesen Hydraulikzylinder eingreifenden Kolben samt Kolbenstange, die mit dem anderen Prüfkörper verbunden ist.

Die Erfindung bietet den Vorteil, daß durch gleichzeitige Druckbeaufschlagung der durch die Vielzahl von Prüfkörpern in mehrere Prüfsegmente aufgeteilten Gesamtstrecke die Lokalisierung von Leckstellen mit einem um 40 bis 80% geringeren Zeitbedarf ermöglicht wird.

Im folgenden wird die Erfindung anhand der Zeichnung näher erläutert, in der ein vorteilhaftes Ausführungsbeispiel dargestellt ist. Es zeigen:

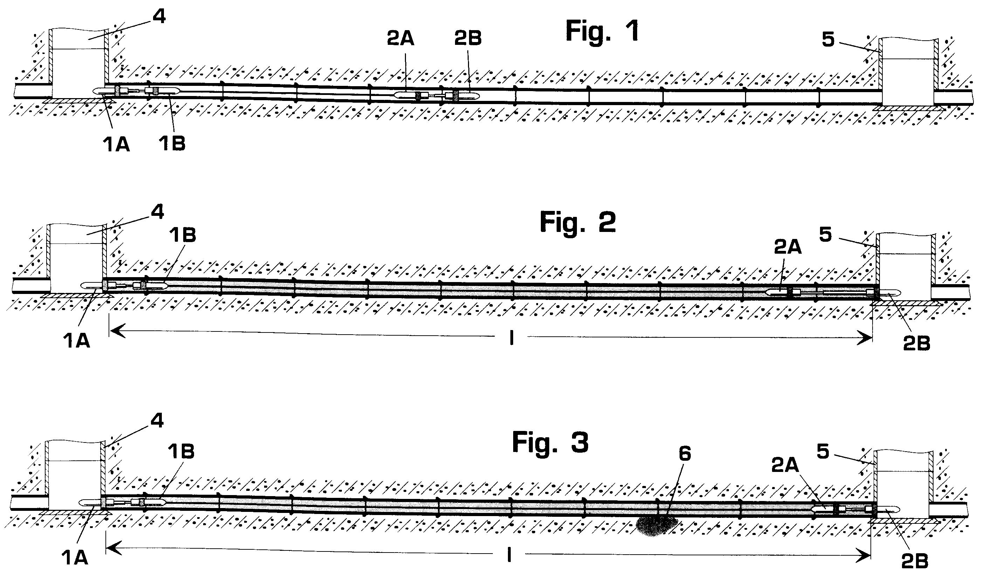

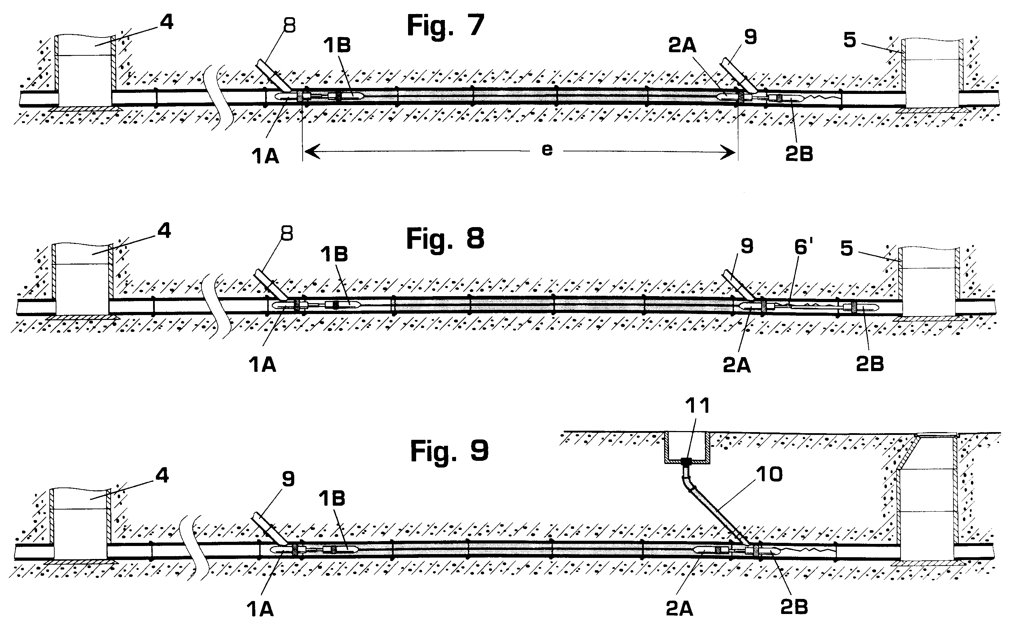

Die Fig. 1 bis 8 schematisch Querschnitte durch einen zu überprüfenden Abwasserkanal, wobei die jeweiligen Positionen der insgesamt vier Prüfkörper eingezeichnet sind.

In Fig. 1 ist mit 3 ein zylindrischer Abwasserkanal bezeichnet, der unterirdisch verläuft und mehrere Zugangsschächte aufweist, von denen zwei mit den Bezugszeichen 4 und 5 versehen sind. Die Prüfköpfe werden durch eine (nicht dargestellte) Vorschubeinrichtung, beispielsweise durch einen der Zugangsschächte, in den zu überprüfenden Hohlraum 3 eingeführt. Jeder Prüfkopf weist dabei zwei Prüfkörper 1A, 1B bzw. 2A, 2B auf, wobei die beiden Prüfkörper eines jeden Prüfkopfes über eine abstandsvariable Verbindungsvorrichtung miteinander verbunden sind, z. B. mittels Hydraulikzylinder, wobei der Zylinder selbst mit dem einen Prüfkörper verbunden ist und der Hydraulikkolben samt der zugehörigen Kolbenstange mit dem anderen Prüfkörper verbunden sind. Die Prüfkörper können in herkömmlicher Weise mit den üblichen Inspektionsvorrichtungen, wie Beleuchtungskörper, Fernsehkamera, Abstandssensor etc. versehen sein, wobei die durch diese Meßgeräte aufgenommenen Daten durch eine (nicht dargestellte) Datenleitung an die oberirdisch angeordnete Steuerzentrale weitergeleitet werden.

Jeder Prüfkörper ist mit einer Dichtungsanordnung versehen, die von herkömmlichem Aufbau ist, z. B. ringförmig ihn umgebende Dichtungsbälge, die nach Beaufschlagung mit einer (nicht dargestellten) Druckfluidquelle an der Innenwand des Hohlraums, d. h. des Abwasserkanals 3 anliegen, so daß zwischen zwei benachbarten Prüfkörpern 1A-1B, 1B-2A, 2A-2B Prüfstrecken gebildet werden, die mit Druck beaufschlagt werden können, wobei ein Druckabbau während einer vorgegebenen Haltzeit auf eine Leckstelle im Kanal hinweist.

Fig. 2 zeigt eine Haltungsprüfung für eine Prüfstrecke 1, die identisch ist mit dem Abstand zwischen den beiden Zugangsschächten 4 und 5. In diesem Fall werden die Dichtungsanordnungen der Prüfkörper 1A und 2B mit Druck beaufschlagt, wohingegen die Dichtungsanordnungen der Prüfkörper 1B und 2A nicht beaufschlagt werden. Dadurch kann die gesamte Strecke l unter Druck gesetzt werden, um eine Leckstelle zu ermitteln.

Fig. 3 zeigt eine derartige Leckstelle, die mit 6 bezeichnet ist. Aufgrund einer visuellen Prüfung oder einer Geräuschortung kann z. B. die Leckstelle 6 eingegrenzt werden, wonach durch Verfahren des aus den beiden Prüfkörpern 2A, 2B bestehenden Prüfkopfes an die Leckstelle und Betätigung der Verbindungsvorrichtung zwischen den beiden Prüfkörpern die Leckstelle 6 eingegrenzt werden kann. Nach Beaufschlagen der Dichtungsanordnungen der beiden Prüfkörper 2A und 2B kann die Leckstelle 6 sehr schnell ermittelt werden. Zeitgleich mit dieser Ermittlung der Leckstelle 6 folgt die Überprüfung des (in der Zeichnung links) liegenden Abschnitts, d. h. der Prüfstrecke bis zum Prüfkörper 1A. Wobei auch hierbei der Prüfkörper 1B nicht mit Druck beaufschlagt wird.

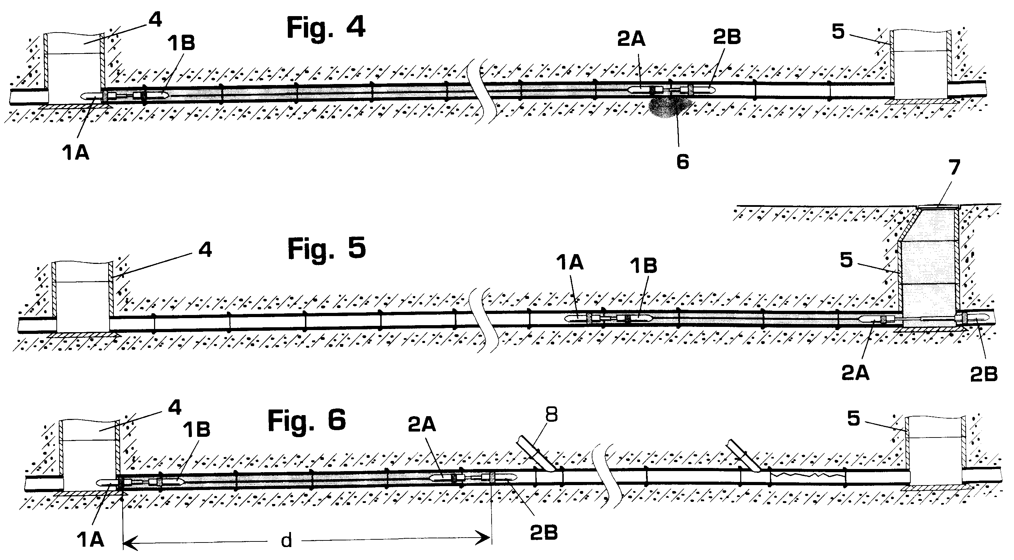

Beim nächsten Prüfschritt, wie er in Fig. 4 dargestellt ist, wird der Prüfkörper 1A an die Stelle von 2B verfahren, 2B wird an die in Fig. 3 gezeigte Stelle an das Ende des Kanals 3 verfahren, so daß nach Abdrücken dieser Teilstrecke der Kanal 3 zwischen den beiden Zugangsschächten 4 und 5 lückenlos auf Dichtigkeit überprüft worden ist.

Fig. 5 zeigt die Möglichkeit der Zusammenfassung einer Streckenprüfung zwischen den beiden Dichtkörpern 1A und 2A und die Zeitgleiche Überprüfung eines Zugangsschachtes 5 zwischen den beiden Prüfkörpern 2A und 2B. Es ist klar, daß in diesem Fall der Zugangsschacht 5 durch einen druckfesten Deckel 7 verschlossen werden muß.

Fig. 6 zeigt die Überprüfung einer Strecke d zwischen einem Zugangsschacht 4 und einem Hausanschluß 8. Hierbei werden die Prüfkörper 1A und 2B mit Druck beaufschlagt, nicht jedoch die Prüfkörper 1B und 2A.

In Fig. 7 ist die Überprüfung einer Strecke e zwischen zwei Hausanschlüssen 8 und 9 dargestellt, wobei die Prüfkörper 1A und 2A mit Druck beaufschlagt werden, nicht jedoch die Prüfkörper 1B und 2B.

In Fig. 8 ist eine Einzelrohrprüfung dargestellt, die zwischen dem Hausanschluß 9 und dem Zugangsschacht 5 stattfindet, um eine Rißstelle 6' aufzuspüren. Hierbei werden die beiden Prüfkörper 2A und 2B durch ihre Verbindungsvorrichtung auseinandergefahren und dann beide mit Druck beaufschlagt.

Fig. 9 zeigt schließlich die Möglichkeit der gleichzeitigen Überprüfung einer Prüfstrecke zwischen zwei Hausanschlüssen 9 und 10 mit gleichzeitiger Überprüfung des Hausanschlusses 10 auf Dichtigkeit, wobei auch hier an der Oberseite des Hausanschlusses 10 ein druckfester Deckel 11 anzubringen ist.

## Patentansprüche

1. Vorrichtung zur Prüfung von Hohlräumen, wie Kanälen, Rohrleitungen und dgl. auf Dichtigkeit, bestehend aus zwei unabhängig voneinander im zu überprüfenden Hohlraum positionierbaren Prüfköpfen, die mit einer Vorschubeinrichtung verbunden sind, sowie mit einer Druckfluidquelle, so daß sie nach der Beaufschlagung der an ihnen angeordneten Dichtungsanordnungen den Hohlraum lokal abdichten und Prüfstrecken zwischen sich bilden, dadurch gekennzeichnet, daß jeder Prüfkopf aus zwei Prüfkörpern besteht, die mittels einer längenveränderlichen Verbindungsanordnung miteinander verbunden sind und daß jeder Prüfkörper mit einer eigenen Dichtungsanordnung versehen ist, die mit der Druckfluidguelle verbunden ist.

2. Vorrichtung nach Anspruch 2, dadurch gekennzeichnet, daß die Verbindungsanordnung aus einem Hydraulikzylinder besteht, der mit dem einen Prüfkörper verbunden ist und aus einem in diesen Hydraulikzylinder eingreifenden Kolben samt Kolbenstange besteht, die mit dem anderen Prüfkörper verbunden ist.

3. Verfahren Zur Prüfung von Hohlräumen, wie Kanälen, Rohrleitungen oder dgl. auf Dichtigkeit, unter Verwendung einer Vorrichtung nach den Ansprüchen 1 und 2, dadurch gekennzeichnet, daß jeder der vier Prüfkörper unabhängig von den anderen Prüfkörpern mit dem Druckfluid beaufschlagt wird, so daß die ihm zugeordnete Dichtungsanordnung an der Innenwand des Hohlraums in druckdichter Weise anliegt und dadurch, ohne Verschieben der einzelnen Prüfkörper, relativ zueinander unterschiedlich lange Prüfstrecken gebildet werden können.
